# DEMANDE DE BREVET EUROPEEN

(11) **EP 4 596 197 A1**
(43) Date de publication de la demande: **06.08.2025**
(21) Numéro de dépôt: 25151320.6
(22) Date de dépôt: 10.01.2025
(51) Int. Cl.: B27C 1/02, B27C 1/00, A01D 41/04, A01D 85/00, A01F 15/00, B27C 1/04

(54) **INSTALLATION DE TRAITEMENT DE BLOCS DE PAILLE**

(30) Priorité: 01.02.2024 FR 2401016
(71) Demandeur: NJO, 49310 Lys-Haut-Layon (FR)
(72) Inventeur: OUDHOF, Nicolaas, 49350 Gennes Val de Loire (FR)
(74) Mandataire: Lequien, Philippe

(57) **Abrégé**

L'invention concerne une installation comprenant un dispositif (100) de traitement de blocs de paille d'isolation, comprenant :
- un bâti (101) délimitant un passage (P) dans lequel les blocs de paille sont destinés à être insérés selon un sens de traitement, le bâti (101) présentant au moins un pan de traitement (210) d'une face du bloc de paille participant à délimiter le passage (P), le pan de traitement (210) formant une surface d'appui du bloc de paille ;
- des moyens d'arasage comprenant au moins une lame d'arasage (301) dans un plan dans lequel s'étend la surface d'appui, au travers d'une lumière ménagée dans le pan de traitement (210).

## Description

### Domaine Technique

Le domaine de l'invention est celui de la conception et de la fabrication de solutions pour le traitement de blocs de paille.

L'invention concerne plus particulièrement un dispositif visant à réaliser un traitement sur des blocs de paille.

### État de la technique

Dans le domaine de l'isolation thermique par la paille, la paille est conditionnée en étant compressée et ficelée, sous une forme adaptée à la réalisation d'une isolation thermique par la paille, c'est-à-dire sous forme de blocs de paille de forme parallélépipédique rectangle de petites dimensions.

Ce conditionnement est réalisé à l'aide d'une botteleuse.

Les professionnels du bâtiment utilisent ces blocs de paille en atelier ou sur les chantiers. Ces professionnels sont aujourd'hui essentiellement des charpentiers, mais les blocs de paille peuvent également être utilisés dans les métiers de la maçonnerie, de l'enduisage, ou de la plâtrerie.

A ces effets, les blocs de paille doivent être préparés afin de les rendre compatibles avec ces différents usages.

Par exemple, dans le cadre d'un enduisage direct de la paille, il est préférable que les blocs de paille présentent un état de surface relativement brut afin de permettre une bonne adhérence des enduits.

Pour la réalisation d'une isolation au sein de panneaux en ossature bois, il est d'abord procédé à l'assemblage des montants, des lisses et des traverses afin de former un cadre, puis une plaque, notamment en bois, formant contreventement est assemblée sur une première face du cadre. Le panneau est retourné puis des blocs de paille sont insérés en force dans les logements délimités par le cadre et le contreventement. Une dernière plaque formant contreventement est alors assemblée sur la deuxième face du cadre afin de refermer les logements pour maintenir captive la paille dans le panneau.

Avant de refermer le panneau en ossature bois, il est nécessaire d'intervenir sur les blocs de paille insérés dans les logements. En effet, ces blocs de paille présentent un état de surface qui n'est pas parfaitement plan, et des brins de paille font saillie par rapport à au plan délimité par le pourtour du cadre, sur lequel la dernière plaque doit être assemblée.

La surface apparente des blocs de paille est alors retaillée afin de l'aplanir, évitant ainsi l'impossibilité de mise en place de la dernière plaque, ou la déformation de cette dernière plaque suite à son assemblage.

Cette opération est réalisée directement sur le lieu d'assemblage des panneaux, c'est à dire dans les ateliers de charpentiers, ou dans les usines de production de panneaux isolés.

Cette opération est par exemple réalisée à l'aide d'une débroussailleuse, notamment du type employant une lame ou un fil mis en rotation pour réaliser la découpe.

L'utilisateur, qui peut être l'artisan intervenant dans l'atelier de charpentier ou dans l'usine précitée, doit alors s'équiper d'un équipement de protection individuelle et d'un harnais pour supporter la débroussailleuse. Cet utilisateur marche alors sur le panneau mis à plat, la face présentant les blocs de paille apparents orientée vers le haut, en utilisant la débroussailleuse pour découper les brins de paille qui font saillie au-dessus du plan délimité par le pourtour du cadre sur lequel la dernière plaque doit être assemblée.

Cette méthode de réalisation d'une isolation au sein de panneaux en ossature bois implique une opération supplémentaire de rectification des blocs de paille insérés dans le cadre du panneau en ossature bois, réalisée par les professionnels montant les panneaux en ossature bois, résultant en une perte de productivité, et produit des déchets et une pollution particulaire de l'air du lieu de production du panneau en ossature bois.

Ces inconvénients peuvent avoir tendance à freiner l'adoption de la paille comme solution d'isolation de panneaux à ossature bois.

### Problème technique

L'invention a notamment pour objectif de pallier à ces inconvénients de l'art antérieur.

Plus précisément, l'invention a pour objectif de proposer une solution visant à éviter ou limiter la réalisation d'une opération supplémentaire de rectification de blocs de paille insérés dans le cadre de panneaux en ossature bois par les professionnels assemblant ces panneaux.

L'invention a également pour objectif de fournir une telle solution permettant d'éviter la pollution ou de limiter la pollution par la paille des lieux de production des panneaux en ossature bois.

### Résumé de l'invention

Ces objectifs, ainsi que d'autres qui apparaîtront par la suite, sont atteints grâce à l'invention qui a pour objet une installation comprenant une botteleuse présentant une sortie d'évacuation de blocs de pailles ficelés, caractérisée en ce qu'elle comprend un dispositif de traitement de blocs de paille d'isolation, le dispositif étant positionné à la sortie d'évacuation de la botteleuse, le dispositif de traitement comprenant :
- un bâti délimitant un passage dans lequel les blocs de paille sont destinés à être insérés selon un sens de traitement, le bâti présentant au moins un pan de traitement d'une face du bloc de paille participant à délimiter le passage, le pan de traitement formant une surface d'appui du bloc de paille ;
- des moyens d'arasage comprenant au moins une lame d'arasage dans un plan dans lequel s'étend la surface d'appui, au travers d'une lumière ménagée dans le pan de traitement.

Grâce au dispositif de traitement de l'installation selon l'invention, il est possible de produire des blocs de paille d'isolation présentant au moins une face rectifiée par les moyens d'arasage.

Ces blocs de paille d'isolation peuvent alors être utilisés pour isoler un panneau à ossature bois en évitant la réalisation d'une opération de rectification sur le lieu d'assemblage de panneaux à ossature bois. En effet, lors de l'installation des blocs de paille dans le panneau à ossature bois, les professionnels doivent alors positionner les blocs de paille de manière à ce que la ou l'une des faces rectifiées s'inscrive dans le plan délimité par le pourtour du cadre sur lequel la dernière plaque est assemblée.

De cette manière, l'opération de rectification est réalisée sur le lieu de production de blocs de paille et non sur le lieu d'assemblage du panneau à ossature bois. La pollution du lieu d'assemblage de panneaux à ossature bois est évitée. De plus, le travail réalisé par les professionnels assemblant les panneaux à ossature bois est simplifié ce qui permet de faciliter l'adoption de la paille comme matériau d'isolation.

Cette configuration permet de produire directement des blocs de paille rectifiés à partir d'une masse de paille en vrac.

Il se produit une complémentarité avantageuse entre la botteleuse et le dispositif de traitement permettant de réaliser une rectification du fait que la progression d'un bloc de paille dans le dispositif de traitement nécessite de pousser le bloc dans le passage pour aller à l'encontre de l'action de la lame d'arasage qui peut avoir tendance à repousser le bloc de paille, et que la botteleuse produit des blocs de paille en les poussant hors de la botteleuse.

En conséquence, la combinaison de la botteleuse et du dispositif de traitement produit une synergie grâce à la production d'un flux de blocs de paille par la botteleuse qui alimente en continu le dispositif de traitement, les blocs de paille étant poussés au travers du passage du dispositif de traitement par le flux de blocs de paille.

Préférentiellement, les moyens d'arasage comprennent une contre-lame complémentaire à la lame d'arasage dans le plan dans lequel s'étend la surface d'appui.

Il a été constaté que l'action de cisaillement de la ou les lames d'arasage contre la contre-lame optimise la découpe des brins de paille.

Avantageusement, la lame d'arasage est montée mobile à rotation autour d'un axe monté fixe par rapport au bâti.

Une telle conception participe à la bonne découpe de la paille, tout en permettant de régler aisément la vitesse

Selon une caractéristique préférée, les moyens d'arasage comprennent un cylindre présentant la ou au moins l'une des lames d'arasage, le cylindre étant monté mobile en rotation par rapport au bâti.

Selon un mode de réalisation préféré, la ou les lames d'arasage sont des lames hélicoïdales.

Des essais ont permis de déterminer que des lames de type hélicoïdales participent à obtenir une bonne découpe de la paille.

Avec des lames hélicoïdales, les performances sont notamment optimales en combinaison avec une contre-lame.

Préférentiellement, les moyens d'arasage comprennent une unité de rectification désolidarisable du bâti, l'unité de rectification présentant le ou l'un des cylindres et la contre-lame complémentaire à la ou les lames d'arasage du cylindre.

Il est possible de remplacer rapidement une unité de rectification pour entretien ou suite à la constatation d'une défaillance.

Selon une variante préférée, le dispositif comprend des moyens de défeutrage dans le plan dans lequel s'étend la surface d'appui, au travers d'une lumière ménagée dans le pan de traitement, en amont des moyens d'arasage selon le sens de traitement.

Il a été constaté que l'action de moyens de défeutrage en amont de la lame d'arasage permet d'améliorer avantageusement l'action de la lame d'arasage, et ainsi l'état de surface de la face rectifiée du bloc de paille.

Selon une caractéristique avantageuse, le dispositif comprend deux pans de traitement parallèles l'un à l'autre.

De cette manière, il est rectifié deux faces opposées du bloc de paille, ce qui permet de s'assurer de l'épaisseur du bloc de paille et de la parfaite capacité du bloc de paille à être insérée dans un panneau à ossature bois.

Préférentiellement, le dispositif comprend des moyens d'aspiration de brins de paille découpés par la ou les lames d'arasage.

Ceci permet de limiter l'encrassement du dispositif par les brins de paille découpés, et de limiter la pollution de l'environnement dans lequel le dispositif est utilisé.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique en perspective d'un dispositif de traitement de blocs de paille d'isolation selon l'invention ;
- la figure 2 est une représentation schématique partielle vue de face du dispositif de traitement ;
- la figure 3 est une représentation schématique partielle, selon une coupe longitudinale, du dispositif de traitement selon l'invention ;
- la figure 4 est une représentation schématique illustrant le fonctionnement de moyens techniques du dispositif de traitement permettant de rectifier une face d'un bloc de paille d'isolation.

### Description détaillée

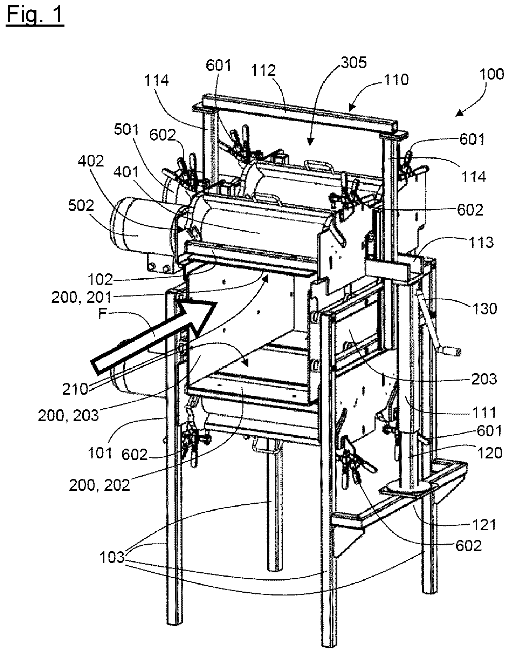

En référence à la figure 1, un dispositif 100 de traitement de blocs de paille d'isolation est représenté.

Ce dispositif 100 de traitement est conçu pour rectifier au moins une face d'un bloc de paille d'isolation.

Un bloc de paille d'isolation, non représentés sur les figures, présente une forme parallélépipédique rectangle, c'est-à-dire une forme de pavé droit.

Le dispositif 100 de traitement comprend un bâti 101.

Ce bâti 101 comprend, entre autres, une armature 102 destinée à supporter différents composants du dispositif 100, et un piétement en l'occurrence formé par des pieds 103, et plus spécifiquement par quatre pieds 103.

Le bâti 101 délimite un passage P dans lequel les blocs de paille sont destinés à être insérés.

Ce passage P présente une forme de section transversale rectangulaire.

Le passage P est délimité plus spécifiquement par quatre pans 200 présentés par le bâti 101.

Le bâti 101 comprend par exemple des plaques formant chacune partiellement ou en totalité ces pans. Un ou plusieurs pans peuvent également être formés par une pluralité de tubes alignés, ou encore par une combinaison de plaques et de tubes.

Le passage P délimité par les pans 200 adopte une forme de parallélépipède rectangle, c'est-à-dire de pavé droit, adaptée à la forme des blocs de paille d'isolation.

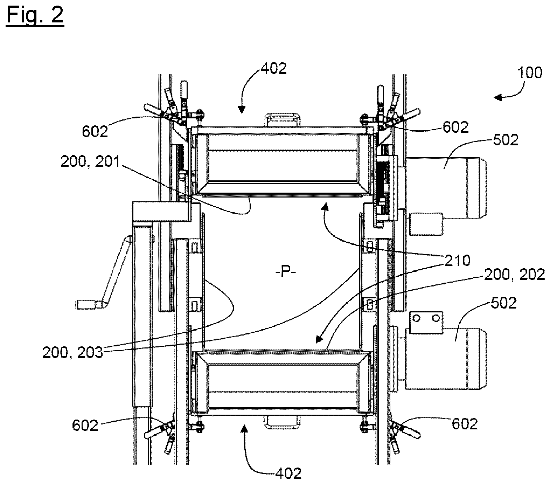

Tel que cela est visible sur les figures 1 et 2, le bâti 101 présente les pans 200, dont :
- un pan supérieur 201 ;
- un pan inférieur 202 ;
- deux pans latéraux 203.

Tel que cela est détaillé par la suite, au moins un pan 200 présenté par le bâti 101 est un pan de traitement 210 d'une face du bloc de paille.

Ce ou ces pans de traitement 210 forment une surface d'appui du bloc de paille d'isolation.

Un bloc de paille d'isolation est destiné à être inséré dans le passage P, selon un sens de traitement (illustré par la flèche F), pour y être traité par le dispositif 100, et plus spécifiquement pour que la ou chaque face du bloc de paille au contact avec un pan de traitement 210 soit rectifiée, tel que cela est détaillé par la suite.

Selon le présent mode de réalisation, le dispositif 100 présente deux pans de traitement 210, formés par le pan supérieur 201 et par le pan inférieur 202.

Ces deux pans de traitement 210 sont parallèles l'un à l'autre.

Selon d'autres modes de réalisation envisagés, le dispositif 100 peut présenter un uniquement pan de traitement 210, ou trois pans de traitement 210, voire quatre pans de traitement 210.

Les blocs de paille d'isolation doivent être insérés dans le passage P par une extrémité ouverte du passage P, et ressortent du passage P par l'autre extrémité ouverte du passage P.

Selon un mode de réalisation envisageable, le dispositif 100 peut également comprendre des moyens de guidage des blocs de paille pour faciliter leur insertion dans le passage P.

Par exemple, ces moyens de guidage peuvent prendre la forme de guides rigides orientés de manière à délimiter un entonnoir s'étendant en s'amenuisant vers l'extrémité ouverte du passage P au travers de laquelle sont introduits les blocs de paille. Les guides rigides peuvent notamment être des rails ou des plaques.

En référence à la figure 1, le dispositif 100 est conçu pour permettre de modifier la distance séparant deux pans 200.

Plus précisément, le dispositif 100 permet de modifier la distance séparant le pan supérieur 201 du pan inférieur 202. Ceci est permis grâce au bâti 101 dont l'armature 102 est réglable.

À cet effet, l'armature 102 comprend une partie principale portant au moins le pan inférieur 202, un cavalier 110 portant le pan supérieur 201, et des moyens de réglage de la hauteur du cavalier par rapport à la partie principale.

Plus précisément, la partie principale de l'armature présente au moins un montant 120, et le cavalier 110 présente un fourreau 111 pour le ou chaque montant 120, dans lequel peut coulisser le montant 120 de la partie principale.

Le montant 120 est notamment monté en appui sur un support intermédiaire 121 présenté par le bâti 101.

Les moyens de réglage présentent quant à eux un levier 130 associé par exemple à un excentrique ou à une vis permettant de fixer le fourreau 111 par rapport au montant 120. Avantageusement, les moyens de réglage peuvent être comprendre une manivelle associée à un système d'engrenage pour permettre de modifier rapidement et aisément la hauteur du cavalier par rapport à la partie principale.

Le cavalier 110 comprend également une traverse supérieure 112, une traverse inférieure 113, et deux longerons 114 reliant la traverse supérieure 112 à la traverse inférieure 113. Le pan supérieur 201 est solidarisé à la traverse inférieure 113, et le fourreau 111 est solidarisé à la traverse inférieure 113.

Le pan supérieur 201 s'étend orthogonalement à l'axe longitudinal du montant 120 et du fourreau 111, de cette manière le coulissement du montant dans le fourreau permet de modifier la distance séparant le pan supérieur 201 du pan inférieur 202 en les conservant en face l'un de l'autre.

Afin de rectifier une face d'un bloc de paille au contact avec le pan de traitement, le dispositif 100 comprend des moyens d'arasage.

Ces moyens d'arasage comprennent au moins une lame d'arasage 301 dans un plan dans lequel s'étend la surface d'appui, au travers d'une lumière ménagée dans le pan de traitement 210.

La lumière, dite lumière arrière 211, présente notamment une forme rectangulaire s'étendant en longueur sur toute la largeur du pan de traitement 210.

Selon le présent mode de réalisation, le dispositif 100 comprenant deux pans de traitement 210, alors chaque pan de traitement 210 dispose de moyens d'arasage, et ainsi d'au moins une lame d'arasage 301.

La description qui suit de moyens d'arasage est réalisée pour un pan de traitement 210, cette description s'applique également aux autres moyens d'arasage de l'autre ou des autres pans de traitement 210.

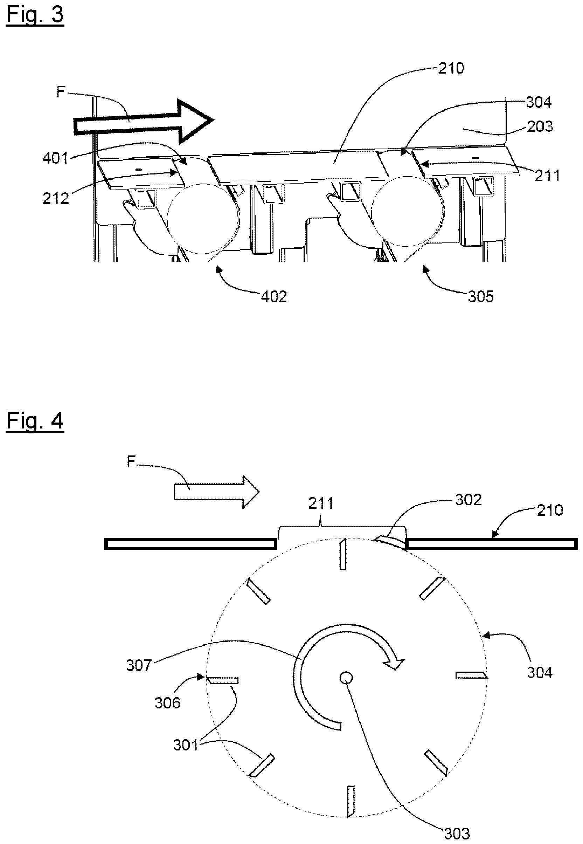

Selon le présent mode de réalisation, et notamment en référence aux figures 3 et 4, la lame d'arasage 301, ou les lames d'arasages 301 sont montées mobiles à rotation autour d'un axe 303 monté fixe par rapport au bâti 101.

Toujours selon le présent mode de réalisation, les moyens d'arasage comprennent une pluralité de lames d'arasage 301. En références à la figure 4, les moyens d'arasage comprennent huit lames d'arasage 301.

Plus spécifiquement, les moyens d'arasage comprennent un cylindre 304 présentant les lames d'arasage 301, et ce cylindre 304 (représenté schématiquement sur les figures) est monté mobile en rotation par rapport au bâti 101. L'extrémité 306 des lames d'arasage 301 décrivent le pourtour du cylindre 304 tel que cela est illustré sur la figure 4.

De plus, les lames d'arasage 301 sont des lames hélicoïdales.

Les multiples lames d'arasage 301 hélicoïdales assemblées ensemble délimitent un cylindre de révolution.

Le cylindre 304 comprend par exemple deux disques d'extrémités portant les lames hélicoïdales. Le cylindre 304 peut également comprendre au moins un disque intermédiaire couplé le long des lames hélicoïdales entre les deux disques d'extrémités afin de rigidifier les lames d'arasage 301.

Selon un mode de réalisation envisageable, les lames d'arasage 301 pourraient être des lames droites.

Tel que cela est visible sur la figure 4, et selon le présent mode de réalisation, les moyens d'arasage comprennent également une contre-lame 302 aux lames d'arasage 301 dans le plan dans lequel s'étend la surface d'appui.

Cette contre-lame 302 est une lame droite.

La contre-lame 302 produit un effet de cisaillement de brins de paille en coopération avec la ou les lames d'arasage 301 complémentaires.

Tel qu'évoqué précédemment, les lames d'arasages 301 sont montées mobiles à rotation autour d'un axe 303 monté fixe par rapport au bâti 101. Cet axe 303 correspond à l'axe de rotation autour duquel le cylindre 304 est mobile à rotation. En présence d'une contre-lame 302, la contre-lame 302 est préférentiellement orientée de manière à ce que son tranchant pointe dans une direction opposée au sens de traitement, tandis que le cylindre 304 tourne dans un sens de rotation 307 dans lequel les lames d'arasage 301 vont dans le même sens que le sens de traitement à proximité de la surface d'appui, pour trancher les brins de paille contre la contre-lame 302.

De manière plus générale, les moyens d'arasage comprennent une unité de rectification 305 désolidarisable du bâti 101.

Cette unité de rectification 305 présente le cylindre 304 et la contre-lame 302 complémentaire aux lames d'arasage 301 du cylindre 304.

Le dispositif 100 comprend quant à lui des premiers moyens de fixation 601 de l'unité de rectification 305 sur le bâti 101. Ces premiers moyens de fixation 601 prennent par exemple la forme de leviers à came excentrique tel que cela est illustré sur les figures.

Le dispositif 100 comprend encore des premiers moyens moteurs 501 permettant d'entraîner en mouvement les moyens d'arasage. Ces premiers moyens moteurs 501 prennent la forme d'un moteur électrique et d'un mécanisme d'entraînement permettant d'entraîner en rotation le cylindre 304 des moyens d'arasage.

Selon le présent mode de réalisation, et tel qu'illustré par les figures 1 à 3, le dispositif 100 comprend également des moyens de défeutrage.

Le défeutrage est réalisé dans le plan dans lequel s'étend la surface d'appui, au travers d'une lumière ménagée dans le pan de traitement 210, et en amont des moyens d'arasage, c'est-à-dire en amont de l'unité de rectification 305, selon le sens de traitement.

La lumière, dite lumière avant 212, présente notamment une forme rectangulaire s'étendant en longueur sur toute la largeur du pan de traitement 210.

En d'autres termes, chaque pan de traitement 210 présente deux lumières transversales le long du sens de traitement. Au travers de la première lumière, dite lumière avant 212, selon le sens de traitement, des moyens de défeutrage réalisent un défeutrage de la surface d'un bloc de paille au contact de la surface d'appui formée par le pan de traitement 210. Au travers de la seconde lumière, dite lumière arrière 211, selon le sens de traitement, la ou les lames d'arasage 301 réalisent un arasage des brins de paille tendant à s'étendre hors de la surface plane formée par la face du bloc de paille.

Les moyens de défeutrage comprennent des griffes conçues pour griffer la surface du bloc de paille.

Ces griffes correspondent par exemple à des doigts rigides. Les griffes peuvent être en métal.

Ces griffes peuvent être associées à un ou des ressorts et être montée de manière à pouvoir se plier lors du défeutrage, et à tendre à revenir à dans une position au repos grâce aux ressorts.

Les griffes peuvent également correspondre à des lames s'étendant orthogonalement au sens de traitement des blocs de paille, et parallèlement à la surface d'appui. Ces griffes sont alors assimilables à celles pouvant être retrouvées sur des systèmes de scarification des pelouses.

Les moyens de défeutrage comprennent également un cylindre 401 portant les griffes, et monté mobile à rotation autour d'un axe fixe par rapport au bâti 101. Cet axe s'étend orthogonalement au sens de traitement des blocs de paille, et parallèlement à la surface d'appui.

L'effet technique de ces moyens de défeutrage est comparable à celui produit par des démousseurs de gazons.

Comme pour les moyens d'arasage, les moyens de défeutrage comprennent une unité de défeutrage 402 désolidarisable du bâti.

Cette unité de défeutrage présente le cylindre 401 pourvu des griffes.

Le dispositif 100 comprend quant à lui des seconds moyens de fixation 602 de l'unité de défeutrage 402 sur le bâti 101. Ces seconds moyens de fixation 602 prennent par exemple la forme de leviers à came excentrique tel que cela est illustré sur les figures.

Le dispositif 100 comprend aussi des seconds moyens moteurs 502 permettant d'entraîner en mouvement les moyens de défeutrage.

Ces seconds moyens moteurs 502 prennent la forme d'un moteur électrique et d'un mécanisme d'entraînement permettant d'entraîner en rotation le cylindre 401 des moyens de défeutrage.

Les moyens moteurs des moyens d'arasage et des moyens de défeutrage sont avantageusement dissociés de l'unité de rectification 305 et de l'unité de défeutrage 402 en étant couplés directement sur le bâti 101.

Ainsi, le retrait d'une de ces unités n'implique pas le retrait des moyens moteurs associés.

Bien que cela ne soit pas représenté, le dispositif 100 comprend des moyens d'aspiration de brins de paille découpés par les lames d'arasage 301.

Ces moyens d'aspiration prennent la forme d'un ventilateur associé à une conduite présentant une bouche d'aspiration positionnée à proximité des lames d'arasage 301. La bouche d'aspiration peut avantageusement prendre la forme d'un carter entourant au moins partiellement les composants couplés sur l'extérieur d'un pan de traitement 210.

Tel qu'évoqué précédemment, l'invention a également pour objet une installation.

Cette installation vise à produire des blocs de paille rectifiés à partir de paille en vrac.

L'installation comprend à cet effet une botteleuse et le dispositif tel que précédemment décrit.

La botteleuse est un dispositif bien connu conçu pour regrouper des brins de paille en un bloc compact et le maintenir uni à l'aide de ficelles par exemple.

La botteleuse permet de produire des blocs de paille ficelés, présentant une forme de pavé droit.

La botteleuse présente une sortie d'évacuation de ces blocs de paille ficelés. Les blocs de paille sortent de la botteleuse en étant poussés par ceux produits par la suite, et évacués par la sortie d'évacuation.

Cette sortie d'évacuation prend la forme d'un canal dans lequel les blocs de paille se succèdent.

Le dispositif de traitement est quant à lui directement positionné à la sortie d'évacuation de la botteleuse, en y étant solidarisé directement ou indirectement de manière à ce que les blocs de pailles soient poussés au travers du passage P.

Ainsi, il n'est pas nécessaire d'incorporer de moyens techniques conçus spécifiquement pour faire avancer les blocs de paille au travers du dispositif 100 de traitement.

L'utilisation de l'installation et du dispositif 100 de traitement est décrite ci-après.

L'installation doit être alimenté en paille en vrac.

Cette paille en vrac est avalée par la botteleuse pour y être compressée et ficelée.

La botteleuse est conçue pour conditionner la paille en vrac sous forme de blocs de paille parallélépipédiques.

Au sortir de la botteleuse, les blocs de paille présentent des ficelles parcourant une face avant (première face à sortir de la botteleuse), les faces supérieures et inférieure, et une face arrière (dernière face à sortir de la botteleuse) des blocs de paille. Les ficelles s'étendent ainsi chacune dans un plan s'étendant orthogonalement à la surface sur laquelle les blocs de paille glissent au sortir de la botteleuse, orienté dans le sens longitudinal du bloc de paille.

Le dispositif 100 de traitement est positionné directement à la sortie d'évacuation, de cette manière, les blocs de paille produit sont poussés dans le passage P du dispositif 100 de traitement.

Les moyens d'arasage et les moyens de défeutrage sont respectivement mis en mouvement par leurs moyens moteur.

Selon le présent mode de réalisation, la face supérieure et la face inférieure de chaque bloc de paille passant dans le passage P sont successivement défeutrées par les moyens de défeutrage, puis rectifiées par les moyens d'arasage.

Il est à noter que les ficelles des blocs de paille ne sont pas impactées par les moyens de défeutrage et par les moyens d'arasage. En effet, ces ficelles sont situées sous la surface apparentes des faces des blocs de paille, et ne sont ainsi pas atteintes par ces différents moyens techniques.

L'installation et le dispositif précédemment décrits permettent d'obtenir des blocs de paille d'isolation rectifiés. Ces derniers présentent des états de surface sur leurs faces rectifiées permettant une intégration plus aisée dans des panneaux à ossature bois.

## Revendications

1. Installation comprenant une botteleuse présentant une sortie d'évacuation de blocs de pailles ficelés,
**caractérisée en ce qu'**elle comprend un dispositif (100) de traitement de blocs de paille d'isolation, le dispositif (100) étant positionné à la sortie d'évacuation de la botteleuse, le dispositif (100) de traitement comprenant :
- un bâti (101) délimitant un passage (P) dans lequel les blocs de paille sont destinés à être insérés selon un sens de traitement, le bâti (101) présentant au moins un pan de traitement (210) d'une face du bloc de paille participant à délimiter le passage (P), le pan de traitement (210) formant une surface d'appui du bloc de paille ;
- des moyens d'arasage comprenant au moins une lame d'arasage (301) dans un plan dans lequel s'étend la surface d'appui, au travers d'une lumière ménagée dans le pan de traitement (210).

2. Installation selon la revendication précédente, **caractérisée en ce que** les moyens d'arasage comprennent une contre-lame (302) complémentaire à la lame d'arasage (301) dans le plan dans lequel s'étend la surface d'appui.

3. Installation selon l'une quelconque des revendications précédentes, **caractérisée en ce que** la lame d'arasage (301) est montée mobile à rotation autour d'un axe (303) monté fixe par rapport au bâti (101).

4. Installation selon la revendication précédente, **caractérisée en ce que** les moyens d'arasage comprennent un cylindre (304) présentant la ou au moins l'une des lames d'arasage (301), le cylindre (304) étant monté mobile en rotation par rapport au bâti (101).

5. Installation selon la revendication précédente, **caractérisée en ce que** la ou les lames d'arasage (301) sont des lames hélicoïdales.

6. Installation selon la revendication 2 et l'une quelconque des revendications 4 et 5, **caractérisée en ce que** les moyens d'arasage comprennent une unité de rectification (305) désolidarisable du bâti (101), l'unité de rectification (305) présentant le ou l'un des cylindres (304) et la contre-lame (302) complémentaire à la ou les lames d'arasage (301) du cylindre (304).

7. Installation selon l'une quelconque des revendications précédentes, **caractérisée en ce que** le dispositif comprend des moyens de défeutrage dans le plan dans lequel s'étend la surface d'appui, au travers d'une lumière ménagée dans le pan de traitement (210), en amont des moyens d'arasage selon le sens de traitement.

8. Installation selon l'une quelconque des revendications précédentes, **caractérisée en ce que** le dispositif comprend deux pans de traitement (210) parallèles l'un à l'autre.

9. Installation selon l'une quelconque des revendications précédentes, **caractérisée en ce que** le dispositif comprend des moyens d'aspiration de brins de paille découpés par la ou les lames d'arasage (301).
